# EUROPÄISCHE PATENTSCHRIFT

(11) **EP 3 300 513 B1**
(45) Veröffentlichungstag und Bekanntmachung des Hinweises auf die Patenterteilung: **11.12.2019**
(21) Anmeldenummer: 16738823.0
(22) Anmeldetag: 15.07.2016
(51) Int. Cl.: F16H 7/18

(54) **KETTENTRIEB MIT KOMBINATIONSSCHIENE**
CHAIN DRIVE WITH A COMBINATION RAIL
TRANSMISSION À CHAÎNE COMPRENANT UN RAIL COMBINÉ

(30) Priorität: 28.08.2015 DE 102015011318
(43) Veröffentlichungstag der Anmeldung: 04.04.2018
(73) Patentinhaber: iwis motorsysteme GmbH & Co. KG, 81369 München (DE)
(72) Erfinder: STIGLMAIER, Franz, 81371 München (DE)
(74) Vertreter: Grünecker Patent- und Rechtsanwälte PartG mbB
(86) Internationale Anmeldenummer: PCT/EP2016/066915
(87) Internationale Veröffentlichungsnummer: WO 2017/036655

(56) Entgegenhaltungen:
- EP-A2- 1 884 683
- WO-A2-2011/146564
- DE-A1-102004 048 282
- DE-A1-102010 005 405

## Beschreibung

Die vorliegende Erfindung betrifft einen Kettentrieb für einen Verbrennungsmotor mit einem Antriebskettenrad, mindestens einem Abtriebskettenrad, einer die Kettenräder koppelnden Antriebskette, einer schwenkbar gelagerten Spannschiene, die gegen einen der Trume der Antriebskette gedrückt ist, und einer Gleitschiene, die an einem anderen der Trume der Antriebskette anliegt, wobei die Gleitschiene und die Spannschiene einen gemeinsamen Basiskörper aufweisen, der um eine gemeinsame Schwenkachse schwenkbar angeordnet ist, und der mit der Antriebskette im Betrieb in Berührung kommende bogenförmige Abschnitt einer Gleitfläche der Gleitschiene eine Krümmungsachse bzw. Krümmungsachsen aufweist, und der mit der Antriebskette in Berührung kommende bogenförmige Abschnitt einer Gleitfläche der Spannschiene eine Krümmungsachse bzw. Krümmungsachsen aufweist, und der Abstand der Krümmungsachse bzw. der gemittelte Abstand der Krümmungsachsen, die der Gleitscheine zuzuordnen ist bzw. sind, zur Schwenkachse des Basiskörpers kleiner ist als der Abstand der Krümmungsachse bzw. der gemittelte Abstand der Krümmungsachsen, die der Spannschiene zuzuordnen ist bzw. sind, zur Schwenkachse des Basiskörpers.

Derartige Kettentriebe sind bei Verbrennungsmotoren weit verbreitet im Einsatz. Ein Anwendungsfall sind Steuerkettentriebe, bei denen die Kurbelwelle mit den Nockenwellen gekoppelt wird. Die Gleitschiene liegt bei derartigen Trieben an dem Zugtrum an, während die schwenkbar gelagerte Spannschiene gegen den Lostrum drückt. Der Sinn einer solchen Anordnung liegt u.a. darin, dass aufgrund der Ausgestaltung des Triebs möglichst keine durch den Verschleiß der Kette indizierten Drehwinkelveränderungen stattfinden. Aus diesem Grunde soll der Zugtrum seine Bahn beibehalten. Die durch Verschleiß bedingte Kettenlängung während der Laufzeit einer Antriebskette wird durch die schwenkbar angedrückte Spannschiene ausgeglichen. Neben dem Steuerkettentrieb können am Verbrennungsmotor auch weitere Kettentriebe existieren. Vorrangig handelt es sich hierbei um einen Ölpumpen- und/oder einen Massenausgleichstrieb. Das Grundprinzip der Kettenspannung und -führung ist bei allen diesen Trieben ähnlich. Darüber hinaus handelt es sich bei derartigen Kettentrieben an Verbrennungsmotoren um hochdynamische Triebe, die einer hohen Beanspruchung ausgesetzt sind, wobei es auf eine sichere Führung der Antriebskette zwingend ankommt. Im Automobilbau gibt es allgemein die Bestrebung, Kosten einzusparen und nach Lösungen zu suchen, die entweder materialeffizienter, montagefreundlicher oder weniger komplex sind, wodurch sich auch Kosteneinsparungen bei der Produktion ergeben.

Ein gattungsgemäßer Kettentrieb ist z.B. aus der DE 102004048282 A1 bekannt. Um Drehzahländerungen zu vermeiden, werden die Längen des Zug- und des Lasttrums im Wesentlichen um den gleichen Betrag verändert, wodurch sich aber Einschränkungen hinsichtlich der Ausgestaltung des Kettentriebs und insbesondere der Spannschiene und der Führungsschiene ergeben.

Eine weitere Zugmittelanordnung gemäß Oberbegriff von Anspruch 1 ist aus der EP 1884683 A2 bekannt. Eine erste und eine zweite Führungsschiene sind angepasst bogenförmig ausgestaltet, miteinander starr verbunden und um eine gemeinsame Achse schwenkbar angeordnet. Die eine Führungsschiene drückt von außen auf das Lasttrum und die andere Führungsschiene von innen auf das Leertrum einer Steuerkette.

Weitere Kettentriebe sind in der US 6358169 A1 und der DE 102006036735 A1 beschrieben.

Es ist daher die Aufgabe der vorliegenden Erfindung, einen Kettentrieb der eingangs genannten Art flexibler in der Ausgestaltung auszuführen.

Diese Aufgabe wird erfindungsgemäß durch einen Kettentrieb gemäß Anspruch 1 gelöst. Zunächst einmal erscheint es ungewöhnlich, die Gleitschiene ebenfalls schwenkbar anzuordnen, weil allgemein das Bestreben besteht, dass im zugehörigen Trum möglichst keine Veränderung der Führungsbahn erfolgen soll. Diese Ausgestaltung bietet die Möglichkeit, einen einzigen Basiskörper herzustellen, der sowohl Bestandteil der Spannschiene als auch der Gleitschiene ist. Insbesondere bei kleineren Trieben, wie z.B. dem Ölpumpen- und/oder Massenausgleichstrieb, muss die Spannschiene über die Laufzeit der Antriebskette nur eine begrenzte Schwenkbewegung ausführen, so dass auch die Gleitschiene eine entsprechend geringe Schwenkbewegung ausführt. Der Einfluss, der auf die Führungsbahn genommen wird, kann deshalb gering gehalten werden oder sogar Null sein. Maßgeblich kommt es darauf an, wieviel Drehwinkelveränderung bei dem beteiligten angetriebenen Kettenrad zugelassen werden kann. Der Ersatz einer Gleitschiene durch eine Spannschiene kam bislang aus Bauraumgründen wegen fehlender Anbindungsmöglichkeit eines Kettenspanners an die Motorölhydraulik nicht in Betracht. Die erfindungsgemäße Lösung schafft hier Abhilfe. Der mit der Antriebskette im Betrieb in Berührung kommende bogenförmige Abschnitt einer Gleitfläche der Gleitschiene weist eine Krümmungsachse bzw. eine Krümmungsachsen auf, und der mit der Antriebskette im Betrieb in Berührung kommende bogenförmige Abschnitt einer Gleitfläche der Spannschiene weist eine Krümmungsachse bzw. Krümmungsachsen auf, wobei der Abstand der Krümmungsachse bzw. der gemittelte Abstand der Krümmungsachsen, die der Gleitschiene zuzuordnen ist bzw. sind, zur Schwenkachse des Basiskörpers kleiner ist als der Abstand der Krümmungsachse bzw. der gemittelte Abstand der Krümmungsachsen, die der Spannschiene zuzuordnen ist bzw. sind, zur Schwenkachse des Basiskörpers. Vereinfacht wird bei dieser Definition davon ausgegangen, dass die jeweiligen Gleitflächen in Dickenrichtung des Basiskörpers ebene Gleitflächen oder zumindest ebene Führungsbestandteile der Gleitflächen aufweisen, so dass von einer Krümmungsachse bzw. von Krümmungsachsen gesprochen werden kann, die naturgemäß parallel zur Schwenkachse verläuft bzw. verlaufen. Die Bogenform der Gleitfläche muss nicht zwangsläufig eine Kreisbogenform sein, weshalb sich verschiedene Krümmungsachsen entlang des Verlaufs der Gleitfläche ergeben können. In der Praxis werden üblicherweise Kreisbogenabschnitte aneinander gereiht. Zur Vereinfachung wird dann von all diesen Krümmungsachsen ein gemittelter Abstand berechnet, in dem die Summe der Abstände der Krümmungsachsen zur Schwenkachse durch die Anzahl der Krümmungsachsen dividiert wird. Wichtig ist bei dieser Betrachtung auch, dass nur die Abschnitte der Gleitfläche in die Betrachtung mit einfließen, die im Betrieb auch tatsächlich in Berührung mit der Antriebskette kommen. Eine Gleitfläche kann naturgemäß mit verschiedensten Profilierungen, Aussparungen, Unterbrechungen etc., z.B. zur Reibungsreduktion, versehen sein, die bei dieser Betrachtung keine Rolle spielen. Der Abstand der Krümmungsachse bzw. der gemittelte Abstand der Krümmungsachsen, die der Gleitschiene zuzuordnen ist bzw. sind, ist zur Schwenkachse des Basiskörpers kleiner als das 6-fache, bevorzugt kleiner als das 4,5-fache, der Kettenteilung der Antriebskette. Das Optimum ist selbstverständlich, wenn dieser Abstand für die Gleitschiene Null ist, d.h. die Krümmungsachse identisch mit der Schwenkachse ist, weil dann die Führungsbahn sich überhaupt nicht mehr ändert. Bei kleinen Drehwinkeln und bei kleinen Abständen der Gleitfläche der Gleitschiene zur Schwenkachse kann aber ein Abstand zugelassen werden, weil der sich dadurch ergebende Einfluss relativ gering ist. Insbesondere wenn dieser Abstand kleiner ist als der hier gewählte Grenzwert, ergibt sich nur ein ganz geringer Einfluss.

Kettentriebe können eine Vielzahl von Kettenrädern aufweisen, wobei in aller Regel nur ein einziges Kettenrad antreibt. Bei einem Verbrennungsmotor ist dies üblicherweise ein Kurbelwellenkettenrad. Für die hier vorgenommene Betrachtung gilt nur der Teilstrang der Antriebskette als Lostrum, der zwischen dem Antriebskettenrad und dem zuletzt angetriebenen Antriebskettenrad verläuft. Alle anderen Abschnitte der Antriebskette, d.h. von einem Abtriebskettenrad zu einem nächsten Abtriebskettenrad oder von einem Antriebskettenrad zu dem zuerst angetriebenen Abtriebskettenrad, werden als Zugtrum bezeichnet.

Die Vorteile der Erfindung lassen sich daher besonders gut darstellen, wenn die Spannschiene gegen ein Zugtrum der Antriebskette gedrückt ist und die Gleitschiene an einem Lostrum der Antriebskette anliegt.

Die Verwendung eines gemeinsamen Basiskörpers führt zur Kosteneinsparung durch Eliminierung der Werkzeugkosten, zu einer Komplexitätsreduzierung durch Reduktion der Teileanzahl und zu einer Aufwandsreduzierung in der Montage (Einsparung von zwei Schrauben, die üblicherweise für die Befestigung der Gleitschiene verwendet werden).

Die Abstände zwischen den Kettenrädern eines Kettentriebs können unterschiedlich sein. Günstigerweise ist deshalb gemäß einer Variante vorgesehen, dass der gemeinsame Basiskörper einen langen, der Spannschiene zugeordneten Tragabschnitt und einen kürzeren, der Gleitschiene zugeordneten Tragabschnitt aufweist. Nachdem die Gleitschiene kürzer ausfällt, ist bereits eine Maßnahme ergriffen, dass deren Verschwenkung einen geringeren Einfluss auf die Führungsbahn der Antriebskette hat.

Die hier definierte Maßnahme führt dazu, dass sich die Schwenkbewegung des Basiskörpers auf die Gleitschiene weit weniger auswirkt, als auf die Spannschiene, so dass die Kettenlängung hauptsächlich von der Spannschiene aufgefangen wird. Der Einfluss auf die Führungsbahn der Gleitschiene bleibt gering.

Gemäß einer weiteren bevorzugten Ausführungsform kann die Bogenform der Gleitschiene und der Abstand derart gewählt sein, dass eine Veränderung der wirksamen Länge des zugehörigen Lostrums im Betrieb von maximal 0,3-mal der Kettenteilung, bevorzugt von maximal 0,16-mal der Kettenteilung, stattfindet. Die hier in Betracht zu ziehende Längung der Antriebskette bezieht sich auf den Neuzustand der Kette und die vom Hersteller angegebene maximale zulässige und durch Verschleiß bewirkte Längung im Betrieb. Nur ein Bruchteil dieser Längung wird demnach in dem Lostrum aufgefangen. Die Hauptkompensation erfolgt weiterhin mittels der Spannschiene.

Bevorzugterweise können zwei Abtriebskettenräder vorgesehen sein, die derart platziert sind, dass der Zugtrum der Antriebskette zwischen den beiden Abtriebskettenrädern um mehr als 85°, bevorzugt mehr als 90°, von der Spannschiene umgelenkt ist, wobei der der Spannschiene zugeordnete Tragabschnitt des Basiskörpers (zumindest abschnittsweise) bogenförmig im Abstand um das Antriebskettenrad herumgeführt ist. Hierdurch hat die Spannschiene einen maßgeblichen Anteil an dem Verlauf der Antriebskette, ohne dass ein weiteres Kettenrad zwischengefügt sein muss. Die Umlenkung um mehr als 85° verschafft günstige Platzverhältnisse, die einen sehr kompakten Trieb zulassen. Des Weiteren kann der Zugtrum zwischen den beiden Abtriebskettenrädern relativ nah an dem Antriebskettenrad vorbeigeführt werden.

Des Weiteren kann vorgesehen sein, dass im Bereich des Zugtrums zwischen dem Antriebskettenrad und dem der gemeinsamen Schwenkachse des Basiskörpers entferntesten Abtriebskettenrad ein Kettenspanner angeordnet ist, der gegen den freien Endabschnitt des der Spannschiene zugeordneten Tragabschnitts drückt. Hierzu ist der Kettenspanner üblicherweise innerhalb der Umschlingung der Antriebskette angeordnet, wodurch der Kettentrieb schlank bleibt.

Zusätzlich kann vorgesehen sein, dass als integraler Bestandteil des Kettenspanners eine weitere Gleitschiene vorgesehen ist, die an dem Zugtrum zwischen dem Antriebskettenrad und dem der gemeinsamen Schwenkachse des Basiskörpers entferntesten Abtriebskettenrad anliegt. Hierdurch wird auch dieses Teilstück geführt und ist daher hinsichtlich seiner Führungsbahn unveränderlich.

Gemäß einer weiteren Ausgestaltung ist vorgesehen, dass das Antriebskettenrad eine Kurbelwelle antreibend ausgestaltet ist, das der gemeinsamen Schwenkachse nächste Abtriebskettenrad die Welle einer Ölpumpe antreibend ausgestaltet ist und das andere Abtriebskettenrad die Welle eines Massenausgleichs antreibend ausgestaltet ist. Hier machen sich die Vorteile besonders bemerkbar, weil dennoch stattfindende kleine Drehwinkelveränderungen verkraftbar sind. Darüber hinaus ist ein solcher Kettentrieb äußerst kompakt und mit wenigen Bauteilen zu erzeugen, wodurch er auch kostengünstiger wird und einfacher zu montieren ist.

Des Weiteren bezieht sich die Erfindung auf eine Kombinationsschiene für einen Kettentrieb nach einem der Ansprüche 1 bis 8. Diese weist einen gemeinsamen Basiskörper, einen ersten, langen, einer Spannschiene zuzuordnenden Gleitabschnitt und einen zweiten, kurzen, einer Gleitschiene zuzuordnenden Gleitabschnitt auf, wobei der Basiskörper eine gemeinsame Schwenkachse für die Gleitabschnitte definiert, der erste Gleitabschnitt derart ausgestaltet ist, dass dieser mit einem ersten Trum, bevorzugt einem Zugtrum, des Kettentriebs in Kontakt bringbar ist, und der zweite Gleitabschnitt derart ausgestaltet ist, dass dieser mit einem zweiten Trum, bevorzugt dem Lostrum, des Kettentriebs in Kontakt bringbar ist. Damit ein möglichst kleiner Einfluss der Gleitschiene auf den Verlauf der Führungsbahn des zugeordneten Trums erfolgt, ist der der Gleitschiene zuzuordnende Gleitabschnitt im Bereich der Schwenkachse angeordnet, wobei dieser mit der Antriebskette im Betrieb in Berührung bringbare bogenförmige Gleitabschnitt eine Krümmungsachse bzw. Krümmungsachsen aufweist, deren Abstand bzw. deren gemittelter Abstand zur Schwenkachse kleiner ist als das 6-fach, bevorzugt kleiner ist als das 4,5-fache, der Kettenteilung einer Antriebskette des Kettentriebs. Durch den geringen Abstand ergibt sich auch nur ein geringer Einfluss auf den Verlauf der Führungsbahn. Begünstigt wird dieses noch dadurch, dass die Schwenkachse relativ nah am Gleitabschnitt angeordnet ist.

Bevorzugt kann der Basiskörper zusammen mit den Gleitabschnitten einteilig als Einkomponentenbauteil hergestellt sein. Hierdurch wir die Kombinationsschiene nochmals günstiger, weil auf unterschiedliche Kunststoffe verzichtet wird. Auch wird darauf verzichtet, dass eine Unterteilung zwischen Tragkörper und Gleitbelagkörpern erfolgt, wie sie bei derartigen Trieben weit verbreitet sind. Alternativ kann selbstverständlich eine Zweikomponentenbauweise ausgeführt sein.

Von Vorteil ist es weiter, wenn gemäß einer Ausgestaltung der der Spannschiene zuzuordnende Gleitabschnitt bogenförmig derart ausgestaltet ist, dass die Antriebskette des Kettentriebs um mehr als 85°, bevorzugt um mehr als 90°, zwischen zwei Abtriebskettenrädern des Kettentriebs umlenkbar ist. Die Spannschiene ist daher stark gekrümmt und übernimmt neben der Spannung der Antriebskette auch einen maßgeblichen Anteil an dem Verlauf der Antriebskette. Die Kombinationsschiene stellt in diesem Zusammenhang ein sehr kostengünstiges und einfaches Mittel für eine derartige Maßnahme dar.

Damit der Einfluss der Gleitschiene möglichst gering gehalten wird und eine Längenänderung der Antriebskette maßgeblich durch die Spannschiene kompensiert wird, kann vorgesehen sein, dass der der Gleitschiene zuzuordnende Gleitabschnitt eine wirksame Gleitfläche mit einer Länge aufweist, die 5-mal, bevorzugt 6-mal, kürzer ist als die Länge der wirksamen Gleitfläche des der Spannschiene zuzuordnenden Gleitabschnitts.

Im Folgenden wird nunmehr eine Ausführungsform der vorliegenden Erfindung anhand von Zeichnungen näher erläutert. Es zeigen.
- Fig. 1: eine Vorderansicht eines erfindungsgemäßen Kettentriebs.
- Fig. 2: eine perspektivische Vorderansicht der Kombinationsschiene aus Fig. 1,
- Fig. 3: eine perspektivische Rückansicht der Kombinationsschiene aus Fig. 1,
- Fig. 4a: eine perspektivische Ansicht des Kettentriebs zur Verdeutlichung des Prinzips der in Fig. 1 dargestellten Ausführungsform,
- Fig. 4b: eine perspektivische Ansicht des Kettentriebs zur Verdeutlichung des Prinzips der in Fig. 1 dargestellten Ausführungsform und
- Fig. 5: eine Prinzipskizze des Kettentriebs zur Verdeutlichung des Idealfalls.

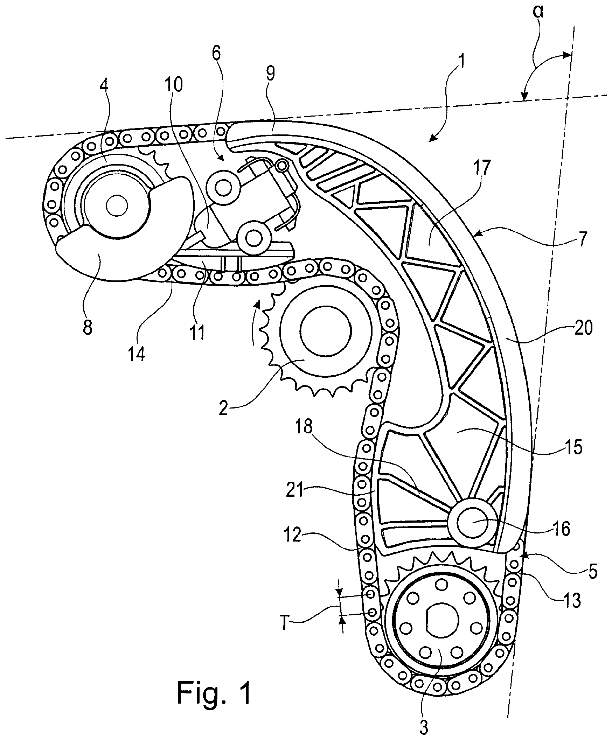

Der in Fig. 1 dargestellte Kettentrieb 1 ist zur Vereinfachung ohne Verbrennungsmotor sowie die zugehörigen Befestigungsmittel dargestellt. Es handelt sich um einen Ölpumpen- und Massenausgleichstrieb für einen solchen Verbrennungsmotor.

Der Kettentrieb 1 umfasst im Wesentlichen ein antreibendes Kurbelwellenkettenrad 2, ein Ölpumpenkettenrad 3, ein Massenausgleichskettenrad 4, eine die Kettenräder 2,3,4 miteinander koppelnde Antriebskette 5, einen Kettenspanner 6 und eine Kombinationsschiene 7. Das Kurbelwellenkettenrad 2 ist mit der nicht dargestellten Kurbelwelle des Verbrennungsmotors verbunden und steht mit der Außenseite der Antriebskette 5 im Eingriff. Das Kurbelwellenkettenrad 2 dreht im Betrieb des Verbrennungsmotors im Uhrzeigersinn und steht mit der Innenseite der Antriebskette im Eingriff. Das Ölpumpenkettenrad 3 ist im normalen Einbauzustand des Verbrennungsmotors unterhalb des Kurbelwellenkettenrads 2 und innerhalb der Umschlingung der Antriebskette 5 angeordnet. Im Gegensatz zum Kurbelwellenkettenrad 2, um das die Antriebskette 5 etwas mehr als 90° herumgeführt ist, ist die Antriebskette 5 bei dem Ölpumpenkettenrad 3 fast 180° herumgeführt. Das Massenausgleichskettenrad 4 treibt ein Massenausgleichsgewicht 8 an, das schwingungsreduzierend wirkt und den durch die Kurbelwelle induzierten Unwuchten in bekannter Weise entgegenwirkt. Auch um das Massenausgleichskettenrad 4 ist die Antriebskette 5 nahezu um 180° herumgeführt. Der Kettenspanner 6 ist innerhalb der Umschlingung der Antriebskette 5 angeordnet. In der Zeichnung ist er in seiner verriegelten Stellung dargestellt. Sobald er entriegelt wird, drückt sein Spannkolben 9 gegen die Kombinationsschiebe 7. Das Kettenspannergehäuse 10 ist mit nicht dargestellten Befestigungsmitteln am Motorblock befestigt. Am unteren Ende des Kettenspannergehäuses 10 ist eine Gleitschiene 11 angebracht, die mit dem Kettenspanner 6 eine Einheit bildet und innen an der Antriebskette 5 zwischen dem Kurbelwellenkettenrad 2 und dem Massenausgleichskettenrad 4 anliegt.

Bei der dargestellten Antriebskette 5 handelt es sich um eine Rollenkette mit sich abwechselnden Innen- und Außenkettengliedern üblicher Bauart mit einer Teilung T. Alternativ könnte auch eine Hülsenkette eingesetzt werden. Neben den Abschnitten der Antriebskette 5, die vollständig (ohne Ein- und Auslauf) mit den Kettenrändern 2,3,4 im Eingriff stehen, ergeben sich drei Teilstränge. Diese Teilstränge sind der Lostrum 12, der sich zwischen Kurbelwellenkettenrad 2 und Ölpumpenkettenrad 3 erstreckt, der relativ lange Zugtrum 13, der sich zwischen dem Ölpumpenkettenrad 3 und dem Massenausgleichskettenrad 4 erstreckt, und dem relativ kurzen Zugtrum 14, der sich zwischen dem Massenausgleichskettenrad 4 und dem Kurbelwellenkettenrad 2 erstreckt.

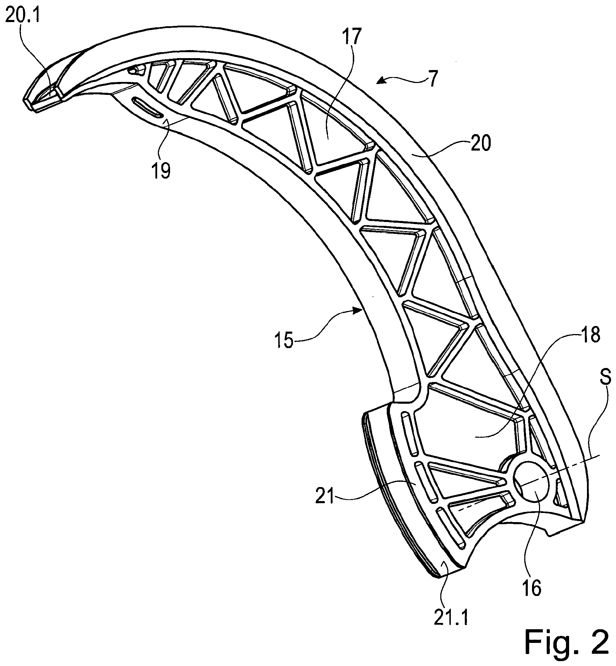

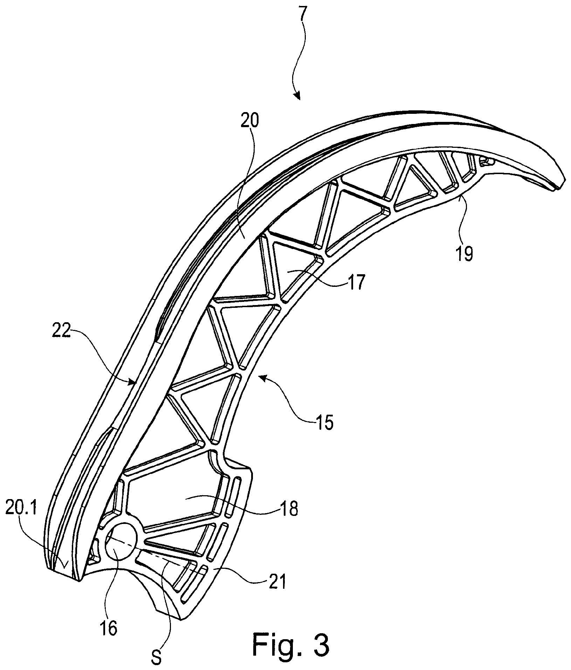

Im Folgenden wird nunmehr unter Zuhilfenahme der Fig. 2 und 3 die Kombinationsschiene 7 näher erläutert.

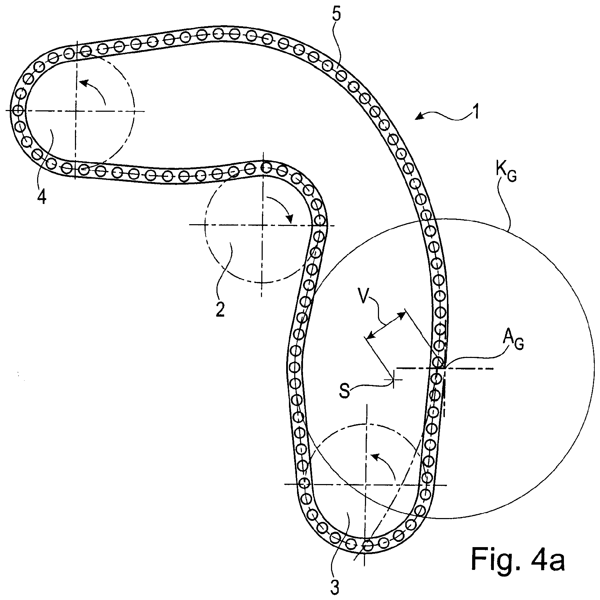

Die Kombinationsschiene 7 ist innerhalb der Umschlingung der Antriebskette 5 angeordnet und weist einen gemeinsamen Basiskörper 15 auf, der an seinem unteren Ende mit einer Schwenköse 16 versehen ist, die zur Aufnahme eines mit dem Motorblock verbundenen Schwenkbolzens dient. Die Hauptachse der Schwenköse 16 ist mit der Schwenkachse S der Kombinationsschiene 7 gleichzusetzen. Der Basiskörper 15 ist aufgeteilt in einen längeren, bogenförmige verlaufenden Tragabschnitt 17 und einen kurzen Tragabschnitt 18. Die Kombinationsschiene 17 stellt eine Kombination aus einer schwenkbar angeordneten Spannschiene, die hauptsächlich von dem längeren Tragabschnitt 17 definiert wird, und einer Gleitschiene dar, die hauptsächlich von dem kürzeren Tragabschnitt 18 definiert wird. Der kürzere Tragabschnitt 18 befindet sich im Bereich der Schwenköse 16, während sich der lange Tragabschnitt 17 von dieser Schwenköse 16 hauptsächlich wegerstreckt. Der Basiskörper 15 ist mit einer Fachwerkstruktur versehen. Auf der Rückseite des Basiskörpers 15, an dem von der Schwenköse 16 entfernten Ende, befindet sich ein Andrückbereich 19, auf den die Stirnseite des Spannkolbens 9 des Kettenspanners 6 im Betrieb aufdrückt. Der Basiskörper 15 ist einteilig ausgeführt und stellt ein Einkomponentenbauteil dar. Das bedeutet, dass die Andrückseiten der jeweiligen Tragabschnitte 17,18 entsprechen mit einem langen Gleitabschnitt 20 und mit einem kurzen Gleitabschnitt 21 versehen sind. Die Gleitabschnitte 20 und 21 definieren jeweils eine bogenförmig verlaufende Gleitfläche 20.1 und eine Gleitfläche 21.1, die von einander wegweisen und jeweils an der Innenseite der Antriebskette anliegen. Die der Gleitschiene zuzuordnende Gleitfläche 21.1 ist in der Dickenrichtung der Kombinationsschiene 7 geradlinig bzw. eben ausgestaltet und weist zumindest in ihrem mit der Antriebskette im Betrieb in Kontakt kommenden Abschnitt in vereinfachter Weise eine Kreiskrümmung mit einem Krümmungsradius R auf. Aufgrund der Geradlinigkeit bzw. Ebenheit der Gleitfläche 21.1 kann zur Betrachtung auch eine Krümmungsachse A_{G} herangezogen werden. Diese Krümmungsachse A_{G} ist in Fig. 4a sowie der zugehörige Krümmungskreis K_{G} dargestellt. Die Krümmungsachse A_{G} verläuft senkrecht zur Bildebene und der Krümmungskreis K_{G} kennzeichnet die Kreiskrümmung der Gleitfläche 21.1. Bei dieser Betrachtung werden die Abrundungsradien am Ende des Gleitbereichs 21 nicht berücksichtigt, da sie nicht zum Kontakt mit der Antriebskette 5 vorgesehen sind.

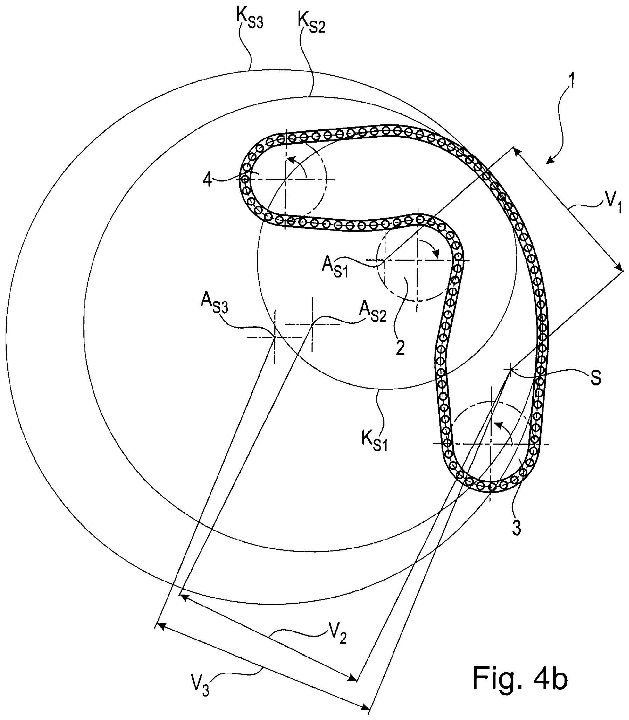

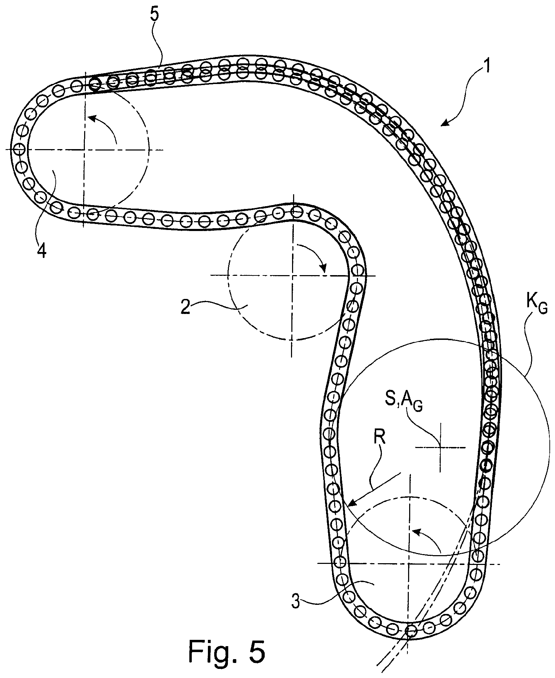

Der Gleitabschnitt 20 hat eine unterteilte Gleitfläche 20.1. In diesem Bereich 22 findet kein Kontakt mit der Antriebskette 5 statt. Dies hat reibungsmindernde Gründe. Die verbleibenden Abschnitte der Gleitfläche 20.1 weisen drei unterschiedliche Krümmungen auf, weshalb hier unterschiedliche Krümmungskreise K_{S1}, K_{S2}, K_{S3} bzw. Krümmungsachsen A_{S1}, A_{S2}, A_{S3} zu ermitteln sind (siehe Fig. 4b). Auch hier spielen wiederum Abrundungsradien an den Enden des Gleitabschnittes 20 sowie die zurückgezogenen Abrundungen im Bereich 22 keine Rolle bei der Betrachtung. Damit überhaupt eine Spannung der Antriebskette 5 mittels der Kombinationsschiene 7 bewirkt werden kann, um eine Längung der Antriebskette 5 während des Betriebs auszugleichen, ist die Schwenkachse S (siehe Fig. 5) versetzt zu den Krümmungsachsen A_{S1}, A_{S2}, A_{S3} der Gleitfläche 20.1 angeordnet. Zur vereinfachten Betrachtung wird jeweils ein Abstand V₁, V₂, V₃ von der Schwenkachse S zu den Krümmungsachsen A_{S1}, A_{S2}, A_{S3} der Gleitfläche 20.1 ermittelt und durch die Anzahl (hier 3) der in Betracht zu ziehenden Abstände V₁, V₂, V₃ bzw. Krümmungsachsen A_{S1}, A_{S2}, A_{S3} dividiert, um einen gemittelten Abstand zu erhalten.

Der Abstand V der Schwenkachse S zur Krümmungsachse A_{G} ist in Fig. 4 dargestellt. Der Abstand V ist so gewählt, dass er im vorliegenden Fall kleiner ist als das 3-fache der Kettenteilung T (nach Definition kleiner als das 6-fache, bevorzugt kleiner als das 4,5-fache, der Kettenteilung T). Des Weiteren ist der Abstand der Schwenkachse S zur Gleitfläche 21.1 geringer als der Krümmungsradius R des Krümmungskreises K_{G}. Wird die Kombinationsschiene 7 nunmehr im Betrieb durch Längung der Antriebskette 5 im Uhrzeigersinn verschwenkt, so hat dies selbstverständlich auch Einfluss auf den Verlauf des Lostrums 12. Der Gleitabschnitt 21 wird von der Antriebskette 5 etwas weggeschwenkt. Allerdings ist dieser Einfluss aufgrund der gewählten geometrischen Verhältnisse relativ gering. Im vorliegenden Fall verändert sich die wirksame Länge des Lostrums 12 im Betrieb nur sehr geringfügig, nämlich weniger als 0,16-mal der Kettenteilung T (gemäß der Definition maximal 0,3-mal der Kettenteilung T, bevorzugt maximal 0,16-mal der Kettenteilung T), wodurch sich nur wenig Einfluss auf den Drehwinkel ergibt. Hauptsächlich verändert sich die Länge des Zugtrums 13, weil der gemittelte Abstand der Krümmungsachsen zur Schwenkachse S, bezogen auf die Gleitfläche 20.1, wesentlich größer ist. Darüber hinaus ist die wirksame Gleitfläche (d.h. die Länge vom Einlauf bis zum Auslauf der Gleitfläche 20.1 bzw. 21.1.) bei der Gleitfläche 20.1 über 5-mal länger als die wirksame Länge der Gleitfläche 21.1 (laut Definition 5-mal länger, bevorzugt 6-mal länger). Hierdurch wird die Längenkompensation maßgeblich durch den Gleitabschnitt 20 bewirkt.

Des Weiteren ist festzustellen, dass der Gleitabschnitt 20 derart bogenförmig geführt ist, dass die Antriebskette 5 zwischen dem Auslauf am Massenausgleichskettenrad 4 und dem Einlauf am Ölpumpenkettenrad 3 um einen Winkel α um mehr als 90° umgelenkt wird (laut Definition mehr als 80°, bevorzugt mehr als 90°). Hierdurch und aufgrund der Tatsache, dass der Basiskörper 15 über den Hauptteil seiner Länge keine volle Höhe aufweist, wie im Bereich des Gleitabschnittes 21, ergibt sich ein insgesamt schmaler Kettentrieb 1 mit wenig Platzbedarf. Aufgrund der Anordnung der Kombinationsschiene 7 können die durch die leichte Verschwenkung des die Gleitschiene repräsentierenden Tragabschnitts 18 mehr als ausgeglichen werden. Die Kombinationsschiene 7 ist einfach herzustellen, weil sie nur ein einziges Werkzeug erfordert. Die Befestigung reduziert sich auf eine einzige Schwenkbefestigung mittels der Schwenköse 16. Auf eine zusätzliche Befestigung einer Gleitschiene kann verzichtet werden. Hierdurch ergeben sich erhebliche Kostenvorteile und eine vereinfachte Montage.

Anhand der Fig. 5 wird nunmehr zusätzlich nur noch auf den angestrebten Idealfall eingegangen, der aber nur bei zulässigen Bauraumverhältnissen Anwendung finden kann. Bei diesem Idealfall sind die Schwenkachse S und die Krümmungsachse A_{G} der Gleitscheine deckungsgleich. Es wird also ein entsprechend kleinerer Krümmungskreis K_{G} verwendet. Schwenkt sich nunmehr die Kombinationsschiene 7 um die Schwenkachse S, hat dies überhaupt keinen Einfluss mehr auf die Führungsbahn des Lostrums 12. Lediglich die Gleitfläche 21.1 verschiebt sich etwas, was sich jedoch auf die Führungsbahn nicht auswirkt. Der komplette Schwenkweg wird dann durch den Gleitabschnitt 20 bereitgestellt. Die beiden Verläufe der Antriebskette 5 sowohl im Neuzustand als auch nach deren Längung sind in Fig. 5 eingezeichnet. Es ist auch zu erkennen, dass es im Zugtrum 14 zu keiner Änderung kommt. In der Praxis wird man aber in vielen Fällen auf einen Kompromiss, ähnlich der Fig. 5, eingehen müssen, wodurch eine leichte Veränderung der Führung des Lostrums 12 in Kauf zu nehmen ist.

### Bezugszeichenliste

- 1: Kettentrieb
- 2: Kurbelwellenkettenrad
- 3: Ölpumpenkettenrad
- 4: Massenausgleichskettenrad
- 5: Antriebskette
- 6: Kettenspanner
- 7: Kombinationsschiene
- 8: Massenausgleichsgewicht
- 9: Spannkolben
- 10: Kettenspannergehäuse
- 11: Gleitschiene
- 12: Lostrum
- 13: langes Zugtrum
- 14: kurzes Zugtrum
- 15: Basiskörper
- 16: Schwenköse
- 17: kurzer Tragabschnitt
- 18: langer Tragabschnitt
- 19: Andrückbereich
- 20: Gleitabschnitt
- 21: Gleitabschnitt
- 20.1.: Gleitfläche
- 21.1: Gleitfläche
- 22: Bereich
- A_{G}: Krümmungsachse
- A_{S1}, A_{S2}, A_{S3}: Krümmungsachse
- K_{G}: Krümmungskreis
- K_{S1}, K_{S2}, K_{S3}: Krümmungskreis
- R: Krümmungsradius
- S: Schwenkachse
- T: Kettenteilung
- V: Abstand
- V₁, V₂, V₃: Abstand

- α: Winkel

## Patentansprüche

1. Kettentrieb (1) für einen Verbrennungsmotor mit einem Antriebsketterad (2), mindestens einem Abtriebskettenrad (3,4), einer die Kettenräder (2,3,4) koppelnden Antriebskette (5), einer schwenkbar gelagerten Spannschiene, die gegen einen der Trume (13) der Antriebskette (5) gedrückt ist, und einer Gleitschiene, die an einem anderen der Trume (12) der Antriebskette (5) anliegt, wobei die Gleitschiene und die Spannschiene einen gemeinsamen Basiskörper (15) aufweisen, der um eine gemeinsame Schwenkachse (S) schwenkbar angeordnet ist, und der mit der Antriebskette (5) im Betrieb in Berührung kommende bogenförmige Abschnitt einer Gleitfläche (21.1) der Gleitschiene eine Krümmungsachse (A_{G}) bzw. Krümmungsachsen aufweist, und der mit der Antriebskette (5) in Berührung kommende bogenförmige Abschnitt einer Gleitfläche (20.1) der Spannschiene eine Krümmungsachse bzw. Krümmungsachsen (A_{S1},A_{S2},A_{S3}) aufweist, und der Abstand (V) der Krümmungsachse (A_{G}) bzw. der gemittelte Abstand der Krümmungsachsen, die der Gleitschiene zuzuordnen ist bzw. sind, zur Schwenkachse (S) des Basiskörpers (15) kleiner ist als das 6-fache der Kettenteilung (T) der Antriebskette (5), **dadurch gekennzeichnet, dass** der Abstand (V) der Krümmungsachse (A_{G}) bzw. der gemittelte Abstand der Krümmungsachsen, die der Gleitscheine zuzuordnen ist bzw. sind, zur Schwenkachse (S) des Basiskörpers (15) kleiner ist als der Abstand der Krümmungsachse bzw. der gemittelte Abstand der Krümmungsachsen (A_{S1},A_{S2},A_{S3}), die der Spannschiene zuzuordnen ist bzw. sind, zur Schwenkachse (S) des Basiskörpers (15).

2. Kettentrieb (1) nach Anspruch 1, **dadurch gekennzeichnet, dass** der Abstand (V) der Krümmungsachse (A_{G}) bzw. der gemittelte Abstand der Krümmungsachsen, die der Gleitschiene zuzuordnen ist bzw. sind, zur Schwenkachse (S) des Basiskörpers (15) kleiner ist als das 4,5-fache der Kettenteilung (T) der Antriebskette (5).

3. Kettentrieb (1) nach Anspruch 1 oder 2, **dadurch gekennzeichnet, dass** die Spannschiene gegen einen Zugtrum (13) der Antriebskette (4) gedrückt ist und die Gleitschiene an einem Lostrum (12) der Antriebskette (5) anliegt.

4. Kettentrieb (1) nach einem der Ansprüche 1 bis 3, **dadurch gekennzeichnet, dass** der gemeinsame Basiskörper (15) einen langen, der Spannschiene zugeordneten Tragabschnitt (17) und einen kürzeren, der Gleitschiene zugeordneten Tragabschnitt (18) aufweist.

5. Kettentrieb (1) nach Anspruch 1 oder 2, **dadurch gekennzeichnet, dass** die Bogenform der Gleitschiene und der Abstand (V) derart gewählt sind, dass eine Veränderung der wirksamen Länge des Lostrums (12) im Betrieb von maximal 0,3-mal der Kettenteilung (T) stattfindet.

6. Kettentrieb (1) nach Anspruch 1, **dadurch gekennzeichnet, dass** die Bogenform der Gleitschiene und der Abstand (V) derart gewählt sind, dass eine Veränderung der wirksamen Länge des Lostrums (12) im Betrieb von maximal 0,16-mal der Kettenteilung (T) stattfindet.

7. Kettentrieb (1) nach einem der vorangegangenen Ansprüche, **dadurch gekennzeichnet, dass** zwei Abtriebskettenräder (3,4) vorgesehen sind, die derart platziert sind, dass der Zugtrum (13) der Antriebskette (5) zwischen den beiden Abtriebskettenrädern (3,4) um mehr als 80°, bevorzugt um mehr als 90°, von der Spannschiene umgelenkt ist, wobei der der Spannschiene zugeordnete Tragabschnitt (17) des Basiskörpers (15) bogenförmig im Abstand um das Antriebskettenrad (2) herumgeführt ist.

8. Kettentrieb (1) nach Anspruch 7, **dadurch gekennzeichnet, dass** im Bereich des Zugtrums (14) zwischen dem Antriebskettenrad (2) und dem der gemeinsamen Schwenkachse (S) des Basiskörpers (15) entferntesten Abtriebskettenrad (4) ein Kettenspanner (6) angeordnet ist, der gegen den freien Endabschnitt des der Spannschiene zugeordneten Tragabschnitts (17) drückt.

9. Kettentrieb (1) nach Anspruch 8, **dadurch gekennzeichnet, dass** als integraler Bestandteil des Kettenspanners (6) eine weitere Gleitschiene (11) vorgesehen ist, die an dem Lostrum (14) zwischen dem Antriebskettenrad (2) und dem der gemeinsamen Schwenkachse (S) des Basiskörpers (15) entferntesten Abtriebskettenrad (4) anliegt.

10. Kettentrieb (1) nach Anspruch 7 oder 8, **dadurch gekennzeichnet, dass** das Antriebskettenrad (2) eine Kurbelwelle antreibend ausgestaltet ist, dass der gemeinsamen Schwenkachse (2) nächste Abtriebskettenrad (3) die Welle einer Ölpumpe antreibend ausgestaltet ist und das andere Abtriebskettenrad (4) die Welle eines Massenausgleichs antreibend ausgestaltet ist.

11. Kombinationsschiene (7) für einen Kettentrieb (1) nach einem der Ansprüche 1 bis 10 mit einem gemeinsamen Basiskörper (15), einem ersten, langen, einer Spannschiene zuzuordnenden Gleitabschnitt (20), und einem zweiten, kurzen, einer Gleitschiene zuzuordnenden Gleitabschnitt (21), wobei der Basiskörper (15) eine gemeinsame Schwenkachse (S) für die Gleitabschnitte (20,21) definiert, der erste Gleitabschnitt (20) derart ausgestaltet ist, dass dieser mit einem Zugtrum (13) des Kettentriebs (1) in Kontakt bringbar ist, und der zweite Gleitabschnitt (21) derart ausgestaltet ist, dass dieser mit einem Lostrum (12) des Kettentriebs (1) in Kontakt bringbar ist, wobei der mit der Antriebskette (5) im Betrieb in Berührung bringbare bogenförmige Gleitabschnitt (21) eine Krümmungsachse (A_{G}) bzw. Krümmungsachsen aufweist, deren Abstand (V) bzw. deren gemittelter Abstand zur Schwenkachse (S) kleiner ist als das 6-fache der Kettenteilung (T) einer Antriebskette (5) des Kettentriebs (1), **dadurch gekennzeichnet, dass** der der Gleitschiene zuzuordnende Gleitabschnitt (21) im Bereich der Schwenkachse (S) angeordnet ist, und dass der Abstand (V) der Krümmungsachse (A_{G}) bzw. der gemittelte Abstand der Krümmungsachsen, die der Gleitscheine zuzuordnen ist bzw. sind, zur Schwenkachse (S) des Basiskörpers (15) kleiner ist als der Abstand der Krümmungsachse bzw. der gemittelte Abstand der Krümmungsachsen (A_{S1},A_{S2},A_{S3}), die der Spannschiene zuzuordnen ist bzw. sind, zur Schwenkachse (S) des Basiskörpers (15).

12. Kombinationsschiene (7) nach Anspruch 11, **dadurch gekennzeichnet, dass** der Basiskörper (15) zusammen mit den Gleitabschnitten (20,21) einteilig als Einkomponentenbauteil hergestellt ist.

13. Kombinationsschiene (7) nach einem der Ansprüche 11 oder 12, **dadurch gekennzeichnet, dass** der der Spannschiene zuzuordnende Gleitabschnitt (20) bogenförmig derart ausgestaltet ist, dass die Antriebskette (5) des Kettentriebs (1) um mehr als 80°, bevorzugt um mehr als 90°, zwischen zwei Abtriebskettenrädern (3,4) des Kettentriebs (1) umlenkbar ist.

14. Kombinationsschiene (7) nach einem der Ansprüche 11 bis 13, **dadurch gekennzeichnet, dass** der der Gleitschiene zuzuordnende Gleitabschnitt (21) eine wirksame Gleitfläche (21.1) mit einer Länge aufweist, die 5-mal kürzer ist als die Länge der wirksamen Gleitfläche (20.1) des der Spannschiene zuzuordnenden Gleitabschnitts (20).

15. Kombinationsschiene (7) nach Anspruch 14, **dadurch gekennzeichnet, dass** der der Gleitschiene zuzuordnende Gleitabschnitt (21) eine wirksame Gleitfläche (21.1) mit einer Länge aufweist, die 6-mal kürzer ist als die Länge der wirksamen Gleitfläche (20.1) des der Spannschiene zuzuordnenden Gleitabschnitts (20).

## Claims

1. A chain drive (1) for an internal combustion engine, comprising a driving sprocket (2), at least one driven sprocket (3, 4), a drive chain (5) coupling the sprockets (2, 3, 4), a pivotably supported tensioning rail which is pressed against one of the spans (13) of the drive chain (5), and a slide rail which abuts on another of the spans (12) of the drive chain (5), wherein the slide rail and the tensioning rail have a common base body (15), which is arranged such that it is pivotable about a common pivot axis (S), and the arcuate portion of a slide surface (21.1) of the slide rail, which comes into contact with the drive chain (5) during operation, has an axis of curvature (A_{G}) or axes of curvature, and the arcuate portion of a slide surface (20.1) of the tensioning rail, which comes into contact with the drive chain, has an axis of curvature or axes of curvature (A_{S1}, A_{S2}, A_{S3}), and the distance (V) of the axis of curvature (A_{G}) which is associated with the slide rail or the averaged distance of the axes of curvature which are associated with the slide rail to the pivot axis (S) of the base body (15) is smaller than 6 times the chain pitch (T) of the drive chain (5), **characterized in that** the distance (V) of the axis of curvature (A_{G}) which is associated with the slide rail or the averaged distance of the axes of curvature which are associated with the slide rail to the pivot axis (S) of the base body (15) is smaller than the distance of the axis of curvature which is associated with the tensioning rail or the averaged distance of the axes of curvature (A_{S1}, A_{S2}, A_{S3}) which are associated with the tensioning rail to the pivot axis (S) of the base body (15).

2. The chain drive (1), **characterized in that** the distance (V) of the axis of curvature (A_{G}) which is associated with the slide rail or the averaged distance of the axes of curvature which are associated with the slide rail to the pivot axis (S) of the base body (15) is smaller than 4.5 times the chain pitch (T) of the drive chain (5).

3. The chain drive (1) according to claims 1 or 2, **characterized in that** the tensioning rail is pressed against a tight span (13) of the drive chain (5) and that the slide rail abuts on a slack span (12) of the drive chain (5).

4. The chain drive (1) according to one of claims 1 to 3, **characterized in that** the common base body (15) comprises a long support section (17) associated with the tensioning rail and a shorter support section (18) associated with the slide rail.

5. The chain drive (1) according to claim 1 or 2, **characterized in that** the arcuate shape of the slide rail and the distance (V) are chosen such that a change of the effective length of the slack span (12) taking place during operation is a maximum change of 0.3 times the chain pitch (T).

6. The chain drive (1) according to claim 1, **characterized in that** the arcuate shape of the slide rail and the distance (V) are chosen such that a change of the effective length of the slack span (12) taking place during operation is a maximum change of 0.16 times the chain pitch (T).

7. The chain drive (1) according to one of the preceding claims, **characterized in that** two driven chains wheels (3, 4) are provided, which are positioned such that, between the two driven sprockets (3, 4), the tight span (13) of the drive chain (5) is deflected by more than 80°, preferably by more than 90°, by means of the tensioning rail, the support section (17) of the base body (15) associated with the tensioning rail extending in an arcuate shape around the driving sprocket (2) in spaced relationship therewith.

8. The chain drive (1) according to claim 7, **characterized in that** in the area of the tight span (14) between the driving sprocket (2) and the driven sprocket (4) that is most remote from the common pivot axis (S) of the base body (15), a chain tensioner (6) is arranged, which presses against the free end portion of the support section (17) associated with the tensioning rail.

9. The chain drive (1) according to claim 8, **characterized in that** a further slide rail (11) is provided as an integral component of the chain tensioner (6), said slide rail (11) abutting on the tight span (14) between the driving sprocket (2) and the driven sprocket (4) that is most remote from the common pivot axis (S) of the base body (15).

10. The chain drive (1) according to claim 7 or 8, **characterized in that** the driving sprocket (2) is configured to drive a crankshaft, that the driven sprocket (3) which is located closest to the common pivot axis (S) is configured to drive the shaft of an oil pump, and that the other driven sprocket (4) is configured to drive the shaft of a mass balancer.

11. A combination rail (7) for a chain drive (1) according to one of the claims 1 to 10, comprising a common base body (15), a first, long slide section (20) to be associated with a tensioning rail, and a second, short slide section (21) to be associated with a slide rail, wherein the base body (15) defines a common pivot axis (S) for the slide sections (20, 21), the first slide section (20) is configured such that it is adapted to be brought into contact with a tight span (13) of the chain drive (1), and the second slide section (21) is configured such that it is adapted to be brought into contact with a slack span (12) of the chain drive (1), whereby the arcuate slide section (21), which is adapted to be brought into contact with the drive chain (5) during operation, having a curvature axis (A_{G}) or curvature axes whose distance (V) to the pivot axis (S) or whose averaged distance to the pivot axis (S) is smaller than 6 times the chain pitch (T) of a drive chain (5) of the chain drive (1), **characterized in that** the slide section (21) to be associated with the slide rail is arranged in the area of the pivot axis (S), and the distance (V) of the axis of curvature (A_{G}) which is associated with the slide rail or the averaged distance of the axes of curvature which are associated with the slide rail to the pivot axis (S) of the base body (15) is smaller than the distance of the axis of curvature which is associated with the tensioning rail or the averaged distance of the axes of curvature (A_{S1}, A_{S2}, A_{S3}) which are associated with the tensioning rail to the pivot axis (S) of the base body (15).

12. The combination rail (7) according to claim 11, **characterized in that** the base body (15) together with the slide sections (20, 21) is produced integrally as a single-component part.

13. The combination rail (7) according to one of the claims 11 or 12, **characterized in that** the slide section (20) to be associated with the tensioning rail is configured in an arcuate shape such that the drive chain (5) of the chain drive (1) is deflectable by more than 80°, preferably by more than 90°, between two driven sprockets (3, 4) of the chain drive (1).

14. The combination rail (7) according to one of the claims 11 to 13, **characterized in that** the slide section (21) to be associated with the slide rail comprises an effective slide surface (21.1) having a length that is 5 times shorter than the length of the effective slide surface (20.1) of the slide section (20) to be associated with the tensioning rail.

15. The combination rail (7) according to claim 14, **characterized in that** the slide section (21) to be associated with the slide rail comprises an effective slide surface (21.1) having a length that is 6 times shorter than the length of the effective slide surface (20.1) of the slide section (20) to be associated with the tensioning rail.

## Revendications

1. Transmission d'entrainement à chaine (1) pour un moteur à combustion interne, comprenant une roue dentée à chaine menante (2) et au moins une roue dentée à chaine menée (3, 4), une chaine d'entrainement (5) qui assure le couplage mutuel des roues à chaine (2, 3, 4), une glissière de tendeur montée de manière pivotante et pressée contre l'un des brins (13) de la chaine d'entrainement (5), et une glissière de glissement, qui s'appuie contre un autre des brins (12) de la chaine d'entrainement (5), transmission
dans laquelle la glissière de glissement et la glissière de tendeur présentent un corps de base (15) commun, qui est agencé de manière pivotante autour d'un axe de pivotement (S) commun, et le tronçon en forme d'arc d'une surface de glissement (21.1) de la glissière de glissement entrant en contact avec la chaine d'entrainement (5) en fonctionnement, présente un axe de courbure (A_{G}) ou respectivement des axes de courbure, et le tronçon en forme d'arc d'une surface de glissement (20.1) de la glissière de tendeur entrant en contact avec la chaine d'entrainement (5), présente un axe de courbure ou respectivement des axes de courbure (A_{S1}, A_{S2}, A_{S3}), et la distance (V) de l'axe de courbure (A_{G}) respectivement de la distance moyenne des axes de courbure, qui est ou sont à associer à la glissière de glissement, à l'axe de pivotement (S) du corps de base (15), est inférieure à six fois le pas de chaine (T) de la chaine d'entrainement (5),
**caractérisée en ce que** la distance (V) de l'axe de courbure (A_{G}), respectivement la distance moyenne des axes de courbure, qui est et respectivement sont à associer à la glissière de glissement, à l'axe de pivotement (S) du corps de base (15), est inférieure à la distance de l'axe de courbure, respectivement la distance moyenne des axes de courbure (A_{S1}, A_{S2}, A_{S3}), qui est et respectivement sont à associer à la glissière de tendeur, à l'axe de pivotement (S) du corps de base (15) .

2. Transmission d'entrainement à chaine (1) selon la revendication 1, **caractérisée en ce que** la distance (V) de l'axe de courbure (A_{G}), respectivement la distance moyenne des axes de courbure, qui est et respectivement sont à associer à la glissière de tendeur, à l'axe de pivotement (S) du corps de base (15), est inférieure à 4,5 fois le pas de chaine (T) de la chaine d'entrainement (5).

3. Transmission d'entrainement à chaine (1) selon la revendication 1 ou la revendication 2, **caractérisée en ce que** la glissière de tendeur est pressée contre un brin de traction (13) de la chaine d'entrainement (5), et la glissière de glissement s'appuie contre un brin mou (12) de la chaine d'entrainement (5).

4. Transmission d'entrainement à chaine (1) selon l'une des revendications 1 à 3, **caractérisée en ce que** le corps de base commun (15) présente un tronçon de support long (17) associé à la glissière de tendeur, et un tronçon de support plus court (18), associé à la glissière de glissement.

5. Transmission d'entrainement à chaine (1) selon la revendication 1 ou la revendication 2, **caractérisée en ce que** la forme d'arc de la glissière de glissement et la distance (V) sont choisies de manière telle qu'il se produise une variation de la longueur active du brin mou (12), en fonctionnement, d'au maximum 0,3 fois le pas de chaine (T).

6. Transmission d'entrainement à chaine (1) selon la revendication 1, **caractérisée en ce que** la forme d'arc de la glissière de glissement et la distance (V) sont choisies de manière telle qu'il se produise une variation de la longueur active du brin mou (12), en fonctionnement, d'au maximum 0,16 fois le pas de chaine (T) .

7. Transmission d'entrainement à chaine (1) selon l'une des revendications précédentes, **caractérisée en ce que** sont prévues deux roues dentées à chaine menées (3, 4), qui sont placées de manière telle, que le brin de traction (13) de la chaine d'entrainement (5) soit dévié par la glissière de tendeur, entre les deux roues dentées à chaine menées (3, 4), de plus de 80°, de préférence de plus de 90°, le tronçon de support (17) du corps de base (15), associé à la glissière de tendeur, s'étendant en forme d'arc à distance autour de la roue dentée à chaine menante (2).

8. Transmission d'entrainement à chaine (1) selon la revendication 7, **caractérisée en ce que** dans la zone du brin de traction (14) entre la roue dentée à chaine menante (2) et la roue dentée à chaine menée (4) la plus éloignée de l'axe de pivotement (S) commun du corps de base (15), est agencé un tendeur de chaine (6), qui presse contre le tronçon d'extrémité libre du tronçon de support (17) associé à la glissière de tendeur.

9. Transmission d'entrainement à chaine (1) selon la revendication 8, **caractérisée en ce qu'**il est prévu en guise de partie intégrante du tendeur de chaine (6), une autre glissière de glissement (11), qui s'appuie contre le brin de traction (14) entre la roue dentée à chaine menante (2) et la roue dentée à chaine menée (4) la plus éloignée de l'axe de pivotement (S) commun du corps de base (15).

10. Transmission d'entrainement à chaine (1) selon la revendication 7 ou la revendication 8, **caractérisée en ce que** la roue dentée à chaine menante (2) est réalisée comme étant entrainée par un vilebrequin, la roue dentée à chaine menée (3) la plus proche de l'axe de pivotement (S) commun est réalisée comme entrainant l'arbre d'une pompe à huile, et l'autre roue dentée à chaine menée (4) est réalisée comme entrainant un compensateur de masse.

11. Glissière combinée (7) pour une transmission d'entrainement à chaine (1) selon l'une des revendications 1 à 10 et comportant un corps de base (15) commun, un premier tronçon de glissement (20), long, à associer à une glissière de tendeur, et un deuxième tronçon de glissement (21), court, à associer à une glissière de glissement, glissière combinée
dans laquelle le corps de base (15) définit un axe de pivotement (S) commun pour les tronçons de glissement (20, 21), le premier tronçon de glissement (20) est configuré de manière à pouvoir être amené en contact avec un brin de traction (13) de la transmission d'entrainement à chaine (1), et le deuxième tronçon de glissement (21) est configuré de manière à pouvoir être amené en contact avec un brin mou (12) de la transmission d'entrainement à chaine (1), et
dans laquelle le tronçon de glissement (21) en forme d'arc pouvant être amené en contact avec la chaine d'entrainement (5), en fonctionnement, présente un axe de courbure (A_{G}) ou respectivement des axes de courbure, dont la distance (V), respectivement la distance moyenne, à l'axe de pivotement (S), est inférieure à six fois le pas de chaine (T) d'une chaine d'entrainement (5) de la transmission d'entrainement à chaine (1), **caractérisée en ce que** le tronçon de glissement (21) associé à la glissière de glissement est agencé dans la zone de l'axe de pivotement (S), et **en ce que** la distance (V) de l'axe de courbure (A_{G}), respectivement la distance moyenne des axes de courbure, qui est et respectivement sont à associer à la glissière de glissement, à l'axe de pivotement (S) du corps de base (15), est inférieure à la distance de l'axe de courbure, respectivement la distance moyenne des axes de courbure (A_{S1}, A_{S2}, A_{S3}), qui est et respectivement sont à associer à la glissière de tendeur, à l'axe de pivotement (S) du corps de base (15).

12. Glissière combinée (7) selon la revendication 11, **caractérisée en ce que** le corps de base (15) est fabriqué d'un seul tenant avec les tronçons de glissement (20, 21), sous la forme d'une pièce à un seul composant.

13. Glissière combinée (7) selon l'une des revendications 11 ou 12, **caractérisée en ce que** le tronçon de glissement (20) à associer à la glissière de tendeur est réalisé sous forme d'arc de manière telle que la chaine d'entrainement (5) de la transmission d'entrainement à chaine (1), puisse être déviée de plus de 80°, de préférence de plus de 90°, entre deux roues dentées à chaine menées (3, 4) de la transmission d'entrainement à chaine (1).

14. Glissière combinée (7) selon l'une des revendications 11 à 13, **caractérisée en ce que** le tronçon de glissement (21) à associer à la glissière de glissement, présente une surface de glissement active (21.1) d'une longueur qui est cinq fois plus courte que la longueur de la surface de glissement active (20.1) du tronçon de glissement (20) à associer à la glissière de tendeur.

15. Glissière combinée (7) selon la revendication 14, **caractérisé en ce que** le tronçon de glissement (21) à associer à la glissière de glissement, présente une surface de glissement active (21.1) d'une longueur qui est six fois plus courte que la longueur de la surface de glissement active (20.1) du tronçon de glissement (20) à associer à la glissière de tendeur.
